# EUROPÄISCHE PATENTSCHRIFT

(11) **EP 1 386 864 B1**
(45) Veröffentlichungstag und Bekanntmachung des Hinweises auf die Patenterteilung: **03.12.2008**
(21) Anmeldenummer: 03016908.0
(22) Anmeldetag: 24.07.2003
(51) Int. Cl.: B65G 57/03, B65B 11/00

(54) **Verfahren und Vorrichtung zum Stapeln von Waren auf einer Palette**
Method and apparatus for stacking goods on a pallet
Procédé et dispositif pour empiler des marchandises sur une palette

(30) Priorität: 29.07.2002 DE 20211672 U; 28.10.2002 DE 10250145
(43) Veröffentlichungstag der Anmeldung: 04.02.2004
(73) Patentinhaber: WITRON Logistik + Informatik GmbH, 92711 Parkstein (DE)
(72) Erfinder: Winkler, Walter, 92711 Parkstein (DE)
(74) Vertreter: Betten & Resch

(56) Entgegenhaltungen:
- US-A- 4 098 051
- US-A- 4 546 593
- US-A- 4 593 517

## Beschreibung

Die Erfindung betrifft eine Vorrichtung und ein System zum Stapeln von Waren auf einem Ladehilfsmittel, vorzugsweise einer Palette.

In Palettenkommissioniersystemen gemäß dem Stand der Technik besteht das Problem, die auf einer Palette oder einem anderen Ladehilfsmittel (LHM) zum Zwecke der Kommissionierung gestapelten Waren zu sichern. Herkömmlicherweise werden Waren gemäß einem Kommissionierauftrag von Hand auf eine Palette, beispielsweise eine Europalette mit den Abmessungen 800 mm x 1200 mm oder eine Düsseldorfer Palette (800 mm x 600 mm), gestapelt. Wenn die gestapelten Waren auf der Palette eine gewisse Höhe erreichen, wird der Stapel zusehends instabil. Ohne Warensicherungssystem hat ein Kommissionierer große Probleme, einen stabilen Stapel zu bilden. Um dies dennoch zu erreichen, braucht er entweder viel Erfahrung oder die Paletten dürfen nicht zu hoch mit Waren bepackt bzw. bestapelt werden, was jedoch zu einer unzureichenden Raumausnutzung, beispielsweise in einem LKW mit dem die bepackten Paletten transportiert werden, führt.

Um dieses Problem der Warensicherung zu lösen, wurden im Stand der Technik diverse Aufstecksysteme bzw. Stützen vorgeschlagen, die auf die Paletten aufgesteckt werden konnten. Die Aufstecksysteme wurden des öfteren zusätzlich auch zum Stapeln der Paletten selbst verwendet.

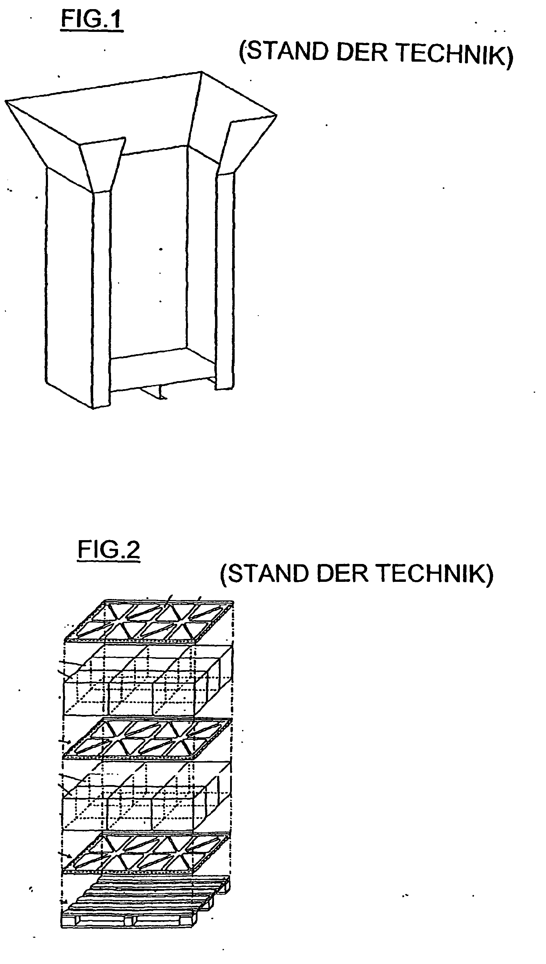

In der deutschen Offenlegungsschrift DE 100 20 475 A1 mit dem Titel "Palettenstapel-Richtgerät" wird die mechanische Ausrichtung von Palettenstapeln unter Zuhilfenahme eines mit einem Trichteraufsatz versehenen Blechkastens, der in Fig. 1 gezeigt ist. offenbart. Dabei wird die Palette an einem anderen Ort zuvor mit den Waren bestückt. Dann wird beispielsweise mit Hilfe eines Gabelstaplers die (unregelmäßig) bestückte Palette in das Richtgerät eingeführt und, nachdem die Waren durch den sich nach unten verjüngenden Trichter "sortiert" sind, wieder entnommen.

Das deutsche Gebrauchsmuster DE 299 21 226 U1 mit dem Titel "Adapterplatte zum Stapeln von Gegenständen auf einer Palette" offenbart eine schmale, mit einem Rand umschlossene Platte, die auf die Palette gelegt wird. Auf diese Platte, die in Fig. 2 gezeigt ist, werden anschließend Waren wie beispielsweise Kartons gelegt. Mit Hilfe der Umrandung der Platte finden die Kartonagen optimalen Halt auf der Platte. Auf die so erzeugte Warenschicht wird die nächste Adapterplatte gelegt, auf die dann weitere Warenschichten bzw. Adapterplatten folgen können. Dadurch entsteht ein senkrecht ausgerichteter Warenstapel auf der Platte. Dieses System funktioniert jedoch nur, wenn die Geometrie der zu stapelnden Waren so ausgelegt ist, daß diese die Ablageplatte vollständig ausfüllen und mit einer einheitlichen Höhe versehen sind, so daß eine weitere Ablageplatte auf die so gebildete Warenschicht gesetzt werden kann.

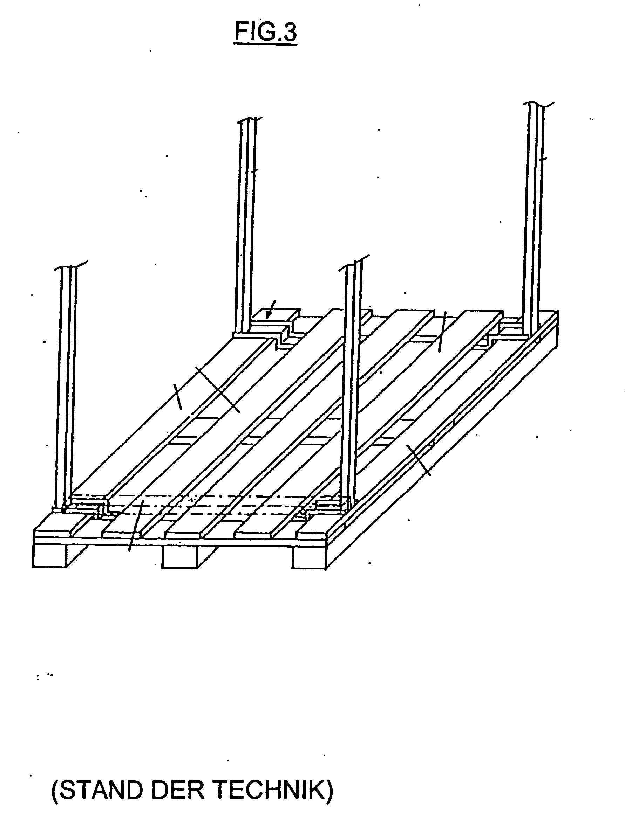

Das deutsche Gebrauchsmuster G 93 04 124.1 mit dem Titel "Stapelstütze für Paletten" beschreibt Stapelstützen, wie sie in Fig. 3 gezeigt sind, die zur Sicherung der Ware in der Nähe der Ecken der Paletten angebracht werden. Diese Stützen können die zu stapelnden Waren jedoch nur unzureichend gegen ein Verrücken schützen, da sie lediglich in den Ecken, jedoch nicht an den Seiten, vorgesehen sind.

Das deutsche Patent DE 37 28 647 C2 mit dem Titel "Palette mit Schutz- und Stapelbügeln" offenbart eine in Fig. 4 gezeigte Palette, auf die Stangen mit Querträgern aufgesteckt werden können. Dafür sind in den Ecken der Palette Bohrungen vorgesehen, so daß ein erstes Stangenpaar beispielsweise parallel zu den kurzen Seiten der Palette aufgesteckt werden kann. Anschließend kann in dieses Stangenpaar ein weiteres Stangenpaar gesteckt werden, das parallel zu den langen Seiten der Palette orientiert ist usw. Dadurch erhält man eine Art Rahmen, wobei die Seitenflächen jedoch nur durch Stangen gestützt werden, so daß auch hier Waren, insbesondere Kleinteile, von der Palette fallen können.

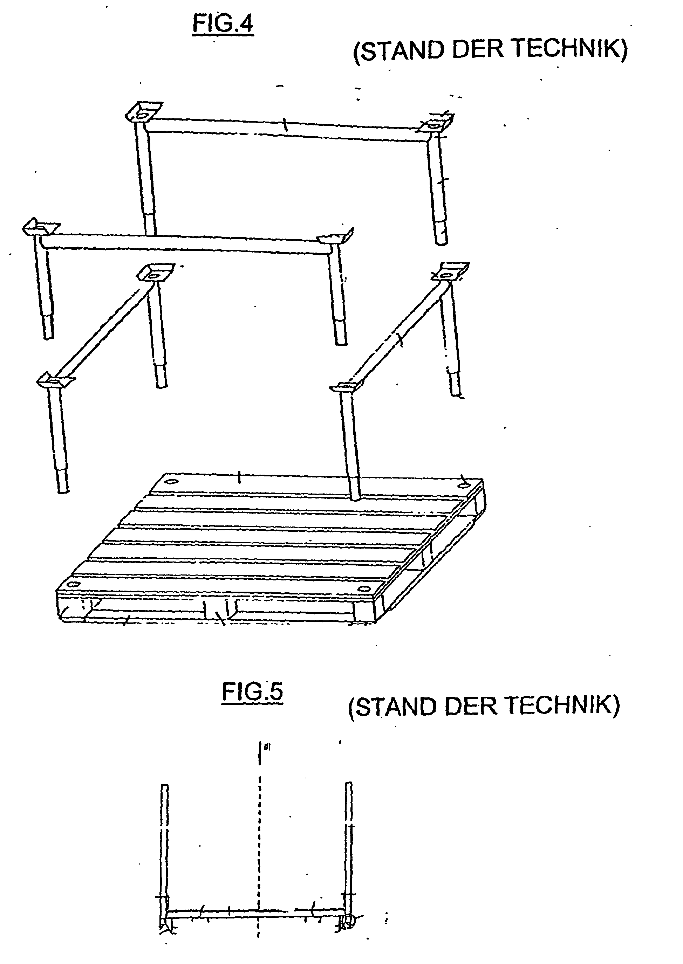

Das deutsche Patent DE 44 03 743 C2 mit dem Titel "Palette für die Aufnahme von Lagergut" beschreibt ein Flachpalette, wie in Fig. 5 gezeigt, mit zwei parallelen seitlichen Stützflächen zur Aufnahme von Lagergut, wodurch das Stapeln von Waren auf der Palette erleichtert werden soll. Die Stützen sind abnehmbar ausgebildet, so daß die Paletten im Leerzustand direkt übereinander stapelbar sind, wodurch der Platzbedarf enorm verringert wird. Jedoch besteht weiterhin die Gefahr, daß die zu stapelnden Waren seitlich von der Palette fallen können.

Das deutsche Patent DE 27 31 948 C2 mit dem Titel "Palettenkäfig-Verriegelungswand" (vgl. Fig. 6 und Fig. 7) und das deutsche Gebrauchsmuster DE 200 11 113 U1 (nicht gezeigt) mit dem Titel "Gitterbox" offenbaren jeweils Paletten, auf die jeweils eine vierseitige Stützkonstruktion aufgebracht wird. Die Konstruktionen geben den Waren Halt. Bei der ersten Schrift ist eine der Seiten klappbar oder kann aus dem Rahmen herausgenommen werden, um Waren auf die Palette zu stapeln. Nachteilig hierbei ist jedoch, daß die beladenen Paletten nur mit Rahmen transportiert werden können. Ein Abnehmen des Rahmens ist nicht möglich, da ansonsten die gestapelten Waren der Gefahr ausgesetzt sind, von der Palette zu fallen. Des weiteren muß die bewegliche Seite ab einer gewissen Höhe der gestapelten Waren geschlossen werden, um ein Herunterrutschen der bereits gestapelten Waren von der Palette zu verhindern. Die Palette kann dann nur noch von oben beladen werden, so daß die Größe der kommissionierenden Person eine physische Grenze darstellt, bis zu der die Palette beladen werden kann.

Das deutsche Gebrauchsmuster G 85 02 822.3 mit dem Titel "Stapelelement für übereinander zu stapelnde Verpackungsbehälter" offenbart ein Eckwinkelprofil mit Bodenplatte, auf der Verpackungen gerichtet gestapelt werden können.

Die deutsche Offenlegungsschrift DE 39 06 922 A1 mit dem Titel "Vorrichtung und Verfahren zum Stapeln und Umwickeln von Gegenständen" offenbart ein vollautomatisches System, mit dem Paletten sowohl (gerade und senkrecht) beladen als auch mit Folien umwickelt werden können. Das Umwickeln erfolgt entweder in Intervallen von jeweils einer Schicht der auf der Palette gestapelten Gegenstände oder zum Schluß, wenn die Palette fertig bestückt ist.

Das amerikanische Patent US 4 593 517 (vgl. Fig. 8) mit dem Titel "Method and Apparatus for Packing Goods" offenbart ebenfalls ein System, das fertig bepackte Paletten umwickelt. Dabei werden die Paletten vollautomatisch bestückt. Das gerade ausgerichtete Bestücken wird hierbei durch einen höhenverstellbaren Führungsrahmen gewährleistet. Hierbei werden die Paletten jedoch mit geometrisch regelmäßigen Gegenständen wie beispielsweise Quadern bestückt, die sich schichtweise stapeln lassen.

Die Schrift US 4,546,593 zeigt eine Stapelhilfe gemäß dem Oberbegriff des Anspruchs 1 für einen Mehl- oder Sandsackstapel in Form von an einer Palette befestigbaren Seitenwänden, wobei eine der Seitenwände in der Mitte nach unten klappbar und damit in ihrer Höhe veränderbar ist.

Ein ähnliches System wird in dem deutschen Patent DE 44 12 830 C2 mit dem Titel "Vorrichtung zum Palettieren von rechteckigen Stückgut, wie Säcken, Kisten, Kartons" offenbart.

Ein Nachteil der oben beschriebenen Systeme bzw. Vorrichtungen ist es, daß die Palette zum Zeitpunkt der endgültigen Sicherung, beispielsweise durch Umwickeln mit einer Folie, frei steht und damit unter Umständen instabil ist. Daher könnte man auf den Gedanken kommen, die Palette inklusive dem Stecksystem auszuliefern, wie es ja bereits bei einigen der herkömmlichen Aufstecksystemen vorgeschlagen wurde. Dabei hat es sich jedoch als nachteilig erwiesen, daß das Stecksystem beim Rücktransport der Paletten vom Zielort zurück zum Kommissionierort abgebaut werden muß, um den sich in beispielsweise in einem LKW bietenden Raum optimal auszunutzen. Wird das Aufstecksystem abgebaut, so muß es am Kommissionierort jedoch wieder aufgesteckt werden, womit sich ein erhöhter personeller Aufwand ergibt. Löst man das Problem der Warensicherung durch ständiges manuelles Umwickeln des Warenstapels, so ergibt sich ein Zeitverlust und somit eine geringere Kommissionierleistung des Kommissionierers.

Es ist daher eine Aufgabe der vorliegenden Erfindung, eine Vorrichtung zum Stapeln von Waren auf einer Palette zu schaffen, mit der eine Palette schnell und sicher unter Beachtung ergonomischer Gesichtspunkte bepackt werden kann.

Eine weitere Aufgabe der vorliegende Erfindung ist es, die Kommissionierleistung eines Kommissionierers beim Stapeln von Waren auf Paletten zu erhöhen.

Gemäß einem Aspekt der Erfindung wird eine Stapelhilfe gemäß Anspruch 1 zum Stapeln von Waren, insbesondere von Waren aus einem Kommissioniersysstem gemäß einem Kommissionierauftrag, auf beliebige Weise und in beliebiger Reihenfolge auf einer in die Vorrichtung einführbaren Palette geschaffen, wobei die Stapelhilfe vier Wandteile, die einen auf der Palette gestapelten Warenstapel umgeben, aufweist, und wobei wenigstens ein Wandteil höhenverstellbar und so an die sich ändernde Höhe des bereits auf der Palette gestapelten Warenstapels anpaßbar ist, und wobei die Stapelhilfe nach Beendigung des Warenstapelvorgangs wieder von der Palette entfernbar ist.

Gemäß einer Ausführungsform ist der obere Rand der Vorder- und/oder Rückwand so ausgestaltet, daß der obere Rand an die sich ändernde Höhe des bereits auf der Palette gestapelten Warenstapels anpaßbar ist.

Gemäß einer weiteren Ausführungsform besteht die Vorderwand aus mehreren Elementen, die steckbar oder durch ein Gelenk miteinander verbunden sind, oder ist ein Rollo oder eine Schiebewand.

Gemäß einer weiteren Ausführungsform der Erfindung besteht die Rückwand aus mehreren Elementen, die steckbar oder durch ein Gelenk miteinander verbunden sind, oder die Rückwand ist ein Rollo oder eine Schiebewand.

Gemäß einer weiteren Ausführungsform der Erfindung weist die Vorrichtung ein Bodenteil auf, an dem die seitlichen Wände befestigbar sind.

Gemäß einer weiteren Ausführungsform der Erfindung sind die seitlichen Wände in den Boden steckbar oder jeweils über ein Gelenk mit dem Boden verbunden.

Gemäß einer weiteren Ausführungsform der Erfindung ist die Vorderwand mit den seitlichen Wänden verbindbar.

Gemäß einer weiteren Ausführungsform der Erfindung weisen die seitlichen Wände jeweils vertikale Aussparungen auf, durch die höhenverfahrbare Bolzen unter eine voll bepackte Palette greifen können, um so die Palette relativ zur Vorrichtung anzuheben bzw. abzusenken.

Gemäß einer weiteren Ausführungsform der Erfindung weist die Vorrichtung Mittel zum Anheben der Vorrichtung relativ zur Palette an mindestens einer der Wände auf.

Gemäß einer weiteren Ausführungsform der Erfindung sind die Mittel zum Anheben Aussparungen in oder Vorsprünge an der Wand, die mit einer externen Vorrichtung zum Anheben der Vorrichtung verbindbar sind.

Erfindungsgemäß wird außerdem ein Verfahren zum Stapeln von Waren auf einem Ladehlifsmittel gemäß Anspruch 12 vorgeschlagen, das die folgenden Schritte umfaßt: (a) Bereitstellen einer Stapelhilfe, die einen auf dem Ladehilfsmittel gestapelten Warenstapel umgibt, (b) Beladen des Ladehilfsmittels mit Waren unter Zuhilfenahme der Stapelhilfe, und (c) Anheben des Ladehilfsmittels relativ zur Stapelhilfe, wobei gleichzeitig der aus der Stapelhilfe herausgehobene Warenstapel zur Stabilisierung fortlaufend mit einem Stabilisierungsmittel wie etwa einer Folie umwickelt wird.

Weitere Aufgaben, Merkmale und Vorteile der vorliegenden Erfindung werden aus der nun folgenden Beschreibung zusammen mit den beigefügten Zeichnungen deutlicher werden, in denen:

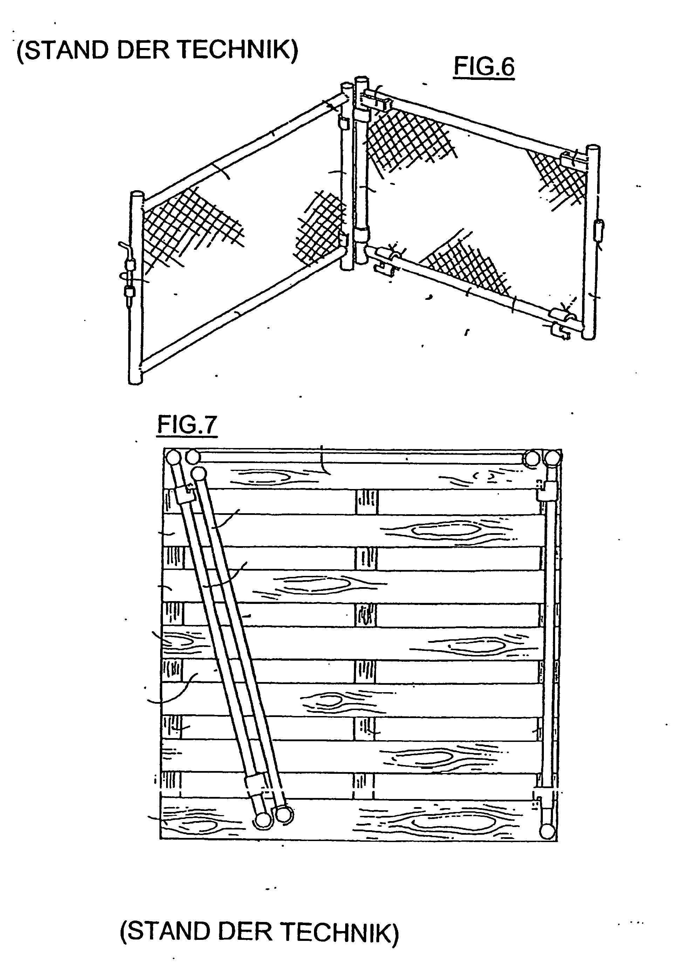

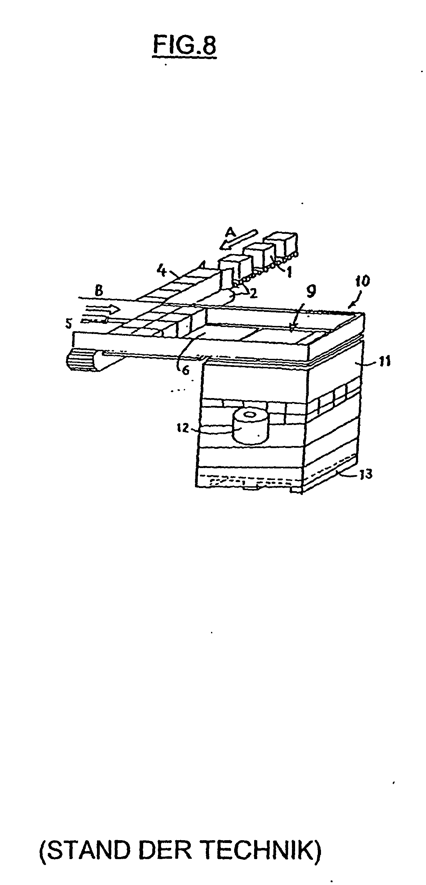

- Fig. 1 bis 8: Warensicherungssysteme gemäß dem Stand der Technik zeigen;
- Fig. 9: ein erstes Ausführungsbeispiel gemäß der Erfindung zeigt, das noch keine Palette mit darauf gestapelten Waren beinhaltet;
- Fig. 10: die Stapelhilfe gemäß der Fig. 9 mit Palette und darauf gestapelten Waren zeigt;
- Fig. 11A und 11B: eine Vorder- und Seitenansicht der Stapelhilfe gemäß der Fig. 9 zeigen;
- Fig. 12A bis 12C: ein System gemäß der Erfindung zeigen; und
- Fig. 13: ein Verfahren illustriert, in dem die erfindungsgemäße Vorrichtung bzw. das erfindungsgemäße System verwendet wird.

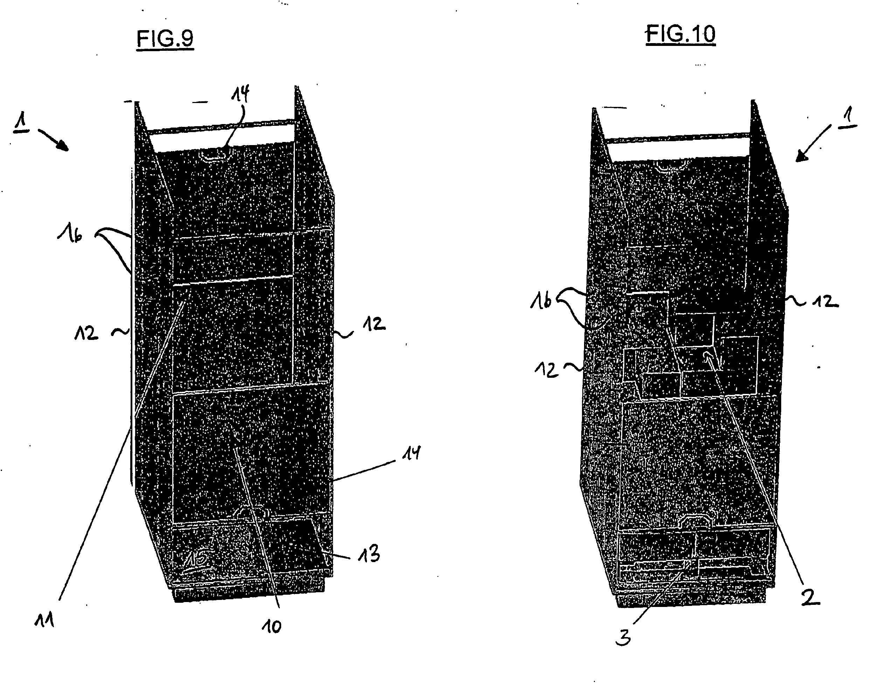

Die Figuren 9 und 10 offenbaren eine erste Ausführungsform der erfindungsgemäßen Vorrichtung. Die Stapelhilfe 1 zum Stapeln von Waren 2, die beispielsweise in der Fig. 10 dargestellt sind, insbesondere von Waren aus einem Kommissioniersystem wird nachfolgend auch Container genannt. Die Palette 3 ist in Fig. 9 nicht dargestellt. Man kann sie jedoch in der Fig. 10 erkennen. Der Container 1 weist eine Vorderwand 10, eine Rückwand 11 und zwei seitliche Wände 12 auf. Bei dem in der Fig. 9 dargestellten Ausführungsbeispiel ist die Vorderwand 10 mit den Seitenwänden 12 verbunden, so daß zwischen dem Boden, auf dem der Container 1 steht, und der unteren Kante der Vorderwand 10 ein Spalt bzw. ein Schubladenfach 13 entsteht, in den bzw. in das eine Palette eingeführt werden kann. Die Vorderwand 10 besteht aus mehreren Teilen. Hier in der Fig. 9 besteht sie aus zwei Teilen, die über ein Gelenk (nicht dargestellt) klappbar miteinander verbunden sind. Im dargestellten Fall ist das obere Element der Vorderwand 10 auf das untere Element geklappt. Das obere Element weist einen Griff 14 auf, damit ein Kommissionierer es nach oben klappen kann. Optional weist auch die Rückwand 11 mehrere Elemente auf. Im Beispiel der Fig. 9 besteht auch die Rückwand 11 aus zwei klappbar miteinander verbundenen Elementen, wobei am oberen Element ebenfalls ein Griff 14 vorgesehen ist. Das obere Element der Rückwand ist im nach oben geklappten Zustand dargestellt.

In der Fig. 10 erkennt man den Container 1, wie er bereits in der Fig. 9 dargestellt ist. Jedoch ist bei dieser Darstellung ein Ladehilfsmittel (Palette) 3 in den Spalt bzw. Einschub 13 eingeschoben. Femer sind auf die Palette 3 Waren 2 gestapelt. Die Wände des Containers 1 sichern dabei die Waren 2 gegen ein Verrutschen von der Palette 3. Die Höhe der klappbaren Elemente der Vorderwand 10 ist so gewählt, daß die obere Kante des unteren Elements in Hüfthöhe eines Kommissionierers angeordnet ist. Ein Kommissionierer kann somit Waren 2 auf eine leere Palette 3 legen oder werfen. Er braucht sich keine Sorgen darum zu machen, daß die Waren von der Palette 3 rutschen, da die Wände des Containers 1 eine ausreichende Warensicherung gewährleisten. In dem Fall, daß der Warenstapel innerhalb des Containers so hoch wird, daß zu befürchten ist, daß die Waren in Richtung der kommissionierenden Person kippen könnten, kann das zweite Element der Vorderwand 10 nach oben geklappt werden, womit die Waren ebenfalls gesichert sind. Die Höhe des zweiten Elements kann so gewählt sein, daß ein Kommissionierer die Palette weiterhin bequem beladen kann.

Bei der in den Fig. 9 und 10 dargestellten Ausführungsform der Erfindung bestehen die Elemente der Vorder- und Rückwand jeweils aus zwei klappbar miteinander verbundenen Elementen. Es können jedoch auch mehr Elemente vorgesehen werden, um das Stapeln für den Kommissionierer noch ergonomischer zu gestalten. Des weiteren können die Elemente anstatt mit einem Klappmechanismus auch aufeinander steckbar miteinander verbunden werden. Alternativ kann sowohl die Vorderwand 10 als auch die Rückwand 11 als ein Rollo oder eine Schiebewand ausgebildet sein, wodurch die Höhenverstellbarkeit der jeweiligen Wand gewährleistet ist. Dadurch, daß sowohl die Rück- als auch die Vorderwand höhenverstellbar ausgestaltet sein kann, kann der Kommissionierer die Waren problemlos von zwei Seiten auf die Palette stellen. Optional kann der Container 1 auch mit einem Boden 15 ausgestattet sein, wie es in der Fig. 9 dargestellt ist. Des weiteren kann der Boden eine Struktur aufweisen, die ähnlich zur Struktur der durch die benutzte Fördertechnik bestimmten Palettenunterstruktur ist. So kann auch der Container auf den bisher üblichen, schon vorhandenen Fördertechniken bewegt werden.

In den beiden Seitenwänden 12 können ferner Aussparungen 16, beispielsweise in Form von Führungsschienen, die parallel zur Längsseite der Seitenwand 12 ausgebildet sind, vorgesehen sein. Die Seitenwände 12 können beispielsweise aus Blech hergestellt sein, um dem Container insgesamt Stabilität zu verleihen. In die Führungsschienen 16 können zum Trennen der Palette 3 vom Container 1 Bolzen eingebracht werden, die unter die im Container 1 befindliche Palette 3 greifen. Optional können auch andere Aussparungen oder Vorsprünge an den Wänden vorgesehen sein, in die eine externe Vorrichtung zum Anheben oder Absenken der Palette gegenüber des Containers eingreift.

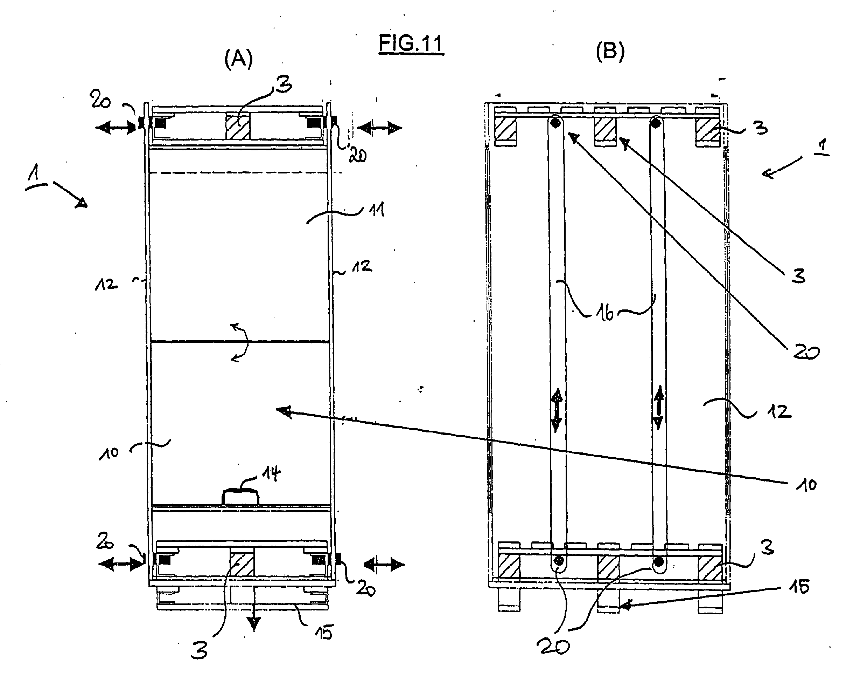

Die Fig. 11A und 11B zeigen den Container 1 gemäß der Fig. 9 in einer Vorder- bzw. einer Seitenansicht. In der Vorderansicht der Fig. 11A ist das obere Element der Vorderwand 10 wieder auf das untere Element der Vorderwand geklappt. Im unteren Teil der Fig. 11A erkennt man eine Palette 3, die in den Container 1 eingebracht ist. Es sind keine Waren 2 auf der Palette 3 gestapelt. Zusätzlich sind zwei Bolzen 20 dargestellt, die bereits seitlich unter die Palette 3 durch die Aussparungen 16 (in der Fig. 11A nicht dargestellt) in den Seitenwänden 12 unter die Palette 3 eingeführt wurden. Im oberen Teil der Fig. 11A ist ebenfalls eine Palette 3 dargestellt, die von Bolzen 20 gehalten wird. Die schwarzen Doppelpfeile in der Fig. 11A verdeutlichen, daß die Bolzen 20 seitlich in die nicht dargestellten Aussparungen 16 hinein- bzw. herausgeführt werden können. Die Bolzen 20 sind entlang den Führungsschienen 16, d.h. parallel zur Höhe des Containers 1, verfahrbar. Dies wird besonders deutlich aus der Fig. 11B.

Die Fig. 11B zeigt eine Seitenansicht des Containers der Fig. 11A. Die Aussparungen bzw. Führungsschienen 16 verlaufen parallel zur Längsseite der jeweiligen Seitenwand 12. In sie können die Bolzen 20 eingeführt werden, um unter die Palette 3 zu greifen. Nachdem die Bolzen 20 unter die Palette 3 gebracht sind, kann diese beispielsweise nach oben bewegt werden. Dieser Zustand ist in der oberen Hälfte der Fig. 11B dargestellt. Die bereits schon weiter oben erwähnte Struktur des Bodens 15 ist in dieser Darstellung klar zu erkennen. Der Boden 15 des Containers 1 ist ähnlich wie der Boden einer Palette 3 ausgebildet.

Gemäß einer weiteren Ausführungsform, die nicht dargestellt ist, können die Bolzen 20 Teil eines Hubmechanismus sein, der wiederum ein Teil des Containers 1 ist. Beispielsweise könnte der Boden 15 einen Hohlraum aufweisen, in den der Hubmechanismus integriert ist. In der Regel werden jedoch der Hubmechanismus bzw. die Bolzen zu einer externen Vorrichtung gehören, die zum relativen Bewegen der Palette 3 gegenüber dem Container 1 verwendet wird.

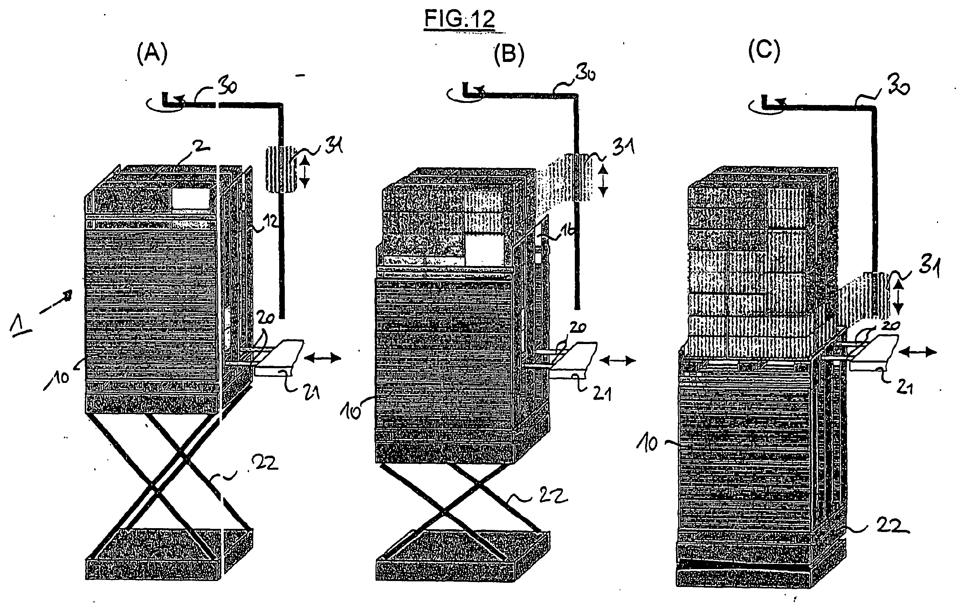

Die Fig. 12A bis 12C illustrieren das erfindungsgemäße Verfahren zum Stapeln von Waren auf einer Palette. Bezugsziffer 21 zeigt einen Teil eines externen Hubmechanismus. Der Container 1 wird auf einer (externen) Hebebühne 22 vorgesehen. Ferner ist eine Wickelvorrichtung 30 mit einem Arm dargestellt, der um die Längsachse des Containers rotierbar ist, was durch einen kreisförmigen Pfeil angedeutet ist. Am Arm der Wickelvorrichtung 30 ist eine Folienrolle 31 vorgesehen. Anstatt Folie kann als Stabilisierungsmittel für den Warenstapel auch Schrumpffolie ein Netz oder Seide zum Einsatz kommen.

In der Fig. 12A ist die Situation dargestellt, in der die sich im Container 1 befindliche Palette voll mit Waren 2 beladen ist. Die Bolzen 20 eines externen Hubmechanismus 21 greifen durch die Führungsschienen 16 in einer der Seitenwände 12 unter die Palette. Femer erkennt man in der Fig. 12A, daß die Vorderwand 10 durch ein Rollo realisiert ist, das in diesem Zustand (der voll beladenen Palette) ganz nach oben gezogen ist. Die Wickelvorrichtung 30 ist vorgesehen, um den Warenstapel mit der Folie 31 zu umwickeln, damit die Waren 2, beispielsweise für einen Transport, auf der Palette gesichert sind. Dazu muß der Warenstapel relativ zum Container 1 bewegt werden. Hierbei sind zwei Alternativen möglich. Entweder die Palette wird aus dem Container 1 (durch die externe Hubvorrichtung 21) herausgehoben oder der Container 1 wird gegenüber der Palette, die durch die externe Hubvorrichtung 21 gehalten wird, abgesenkt. Bei dem in der Fig. 12 dargestellten Variante handelt es sich um die letztere.

Fig.12B zeigt den Zustand, bei dem der Container 1 durch Absenken der Hebebühne 22 gegenüber dem Warenstapel abgesenkt ist. Der frei aus dem Container 1 herausragende Abschnitt des Warenstapels wird mit Hilfe der Wickelvorrichtung 30 mit der Folie 31 gegen ein Verrutschen gesichert. Der Arm, an dem sich die Folienrolle befindet, rotiert um den freigelegten Warenstapelabschnitt, wobei die Folie 31 von der Rolle abgewickelt wird. Das Abwickeln erfolgt vorzugsweise unter mechanischer Spannung, so daß der freie Warenstapelabschnitt eng "eingeschnürt" wird. Genauso ist es jedoch denkbar, daß die externe Hubvorrichtung 21 den Warenstapel gegenüber dem Container 1 nach oben bewegt, so daß ein Abschnitt des Warenstapels freigelegt wird, der anschließend mit Hilfe der Wickelmaschine 30 eingewickelt werden kann.

Die Fig. 12C zeigt einen fast vollständig umwickelten Warenstapel. Die Hebebühne 22 ist komplett abgesenkt, wodurch der Container 1 den gesamten Warenstapel freigibt. Wenn der Warenstapel vollständig umwickelt ist, kann er innerhalb des Kommissionierungssystem weitergeleitet werden, um beispielsweise in einen LKW geladen zu werden. der die so verpackten Waren an seinen Bestimmungsort bringt. Ein typisches Anwendungsbeispiel ist die Kommissionierung von Waren für den Einzelhandel in einem großen Zentrallager, von dem aus Filialen beliefert werden.

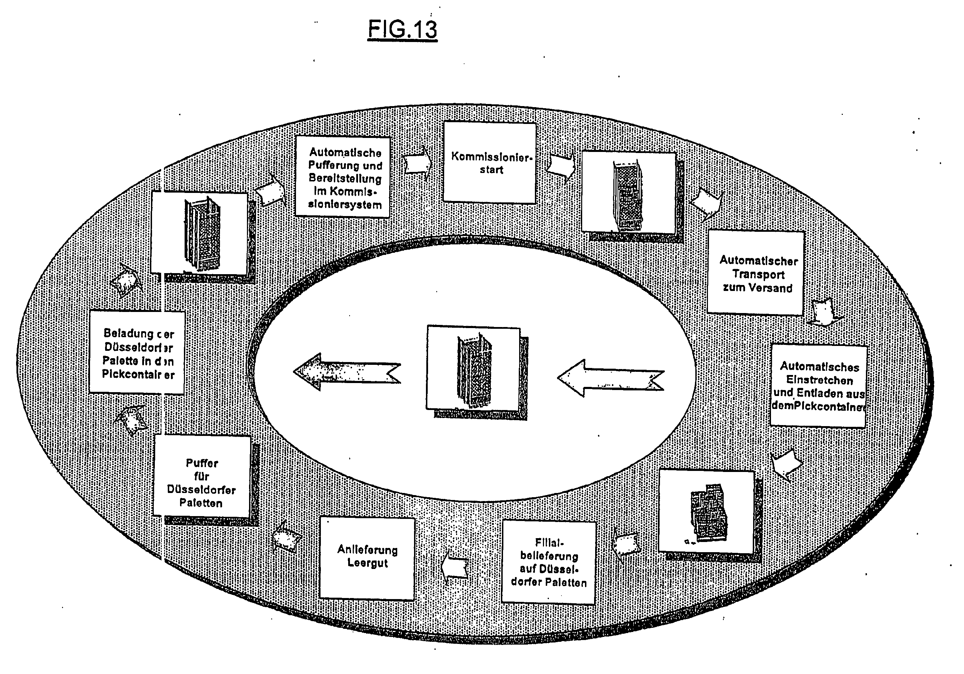

In der Fig. 13 ist der typische Verfahrensablauf eines Kommissioniervorgangs unter Verwendung des erfindungsgemäßen Verfahrens bzw. der Vorrichtung zum Stapeln von Waren auf Paletten dargestellt. Es handelt sich dabei um einen Kreislauf, der beispielsweise auf der 12-Uhr-Position mit dem Kommissionierstart beginnt. In einem ersten Schritt wird eine Palette (vollautomatisch) in die Schublade 13 (vgl. Fig. 9 und 10) des Containers 1 eingebracht. Optional können einige dieser so vorbereiteten Container in einem Puffer des Kommissioniersystems zwischengespeichert werden, um bei Bedarf den Kommissionierem zugeführt zu werden. Anschließend beginnt der Kommissionierer die Waren auf eine beliebige Art und Weise und in einer beliebigen, ihm günstig erscheinenden Reihenfolge in den Container zu kommissionieren. Ragt der Stapel über das obere Ende der höhenverstellbaren Wand hinaus oder droht er instabil zu werden, kann der Kommissionierer die Vorder- bzw. Rückwand, je nachdem von welcher Seite kommissioniert wird, nach oben verstellen, um den frei liegenden Waren wieder Halt zu geben. Durch die höhenverstellbare Wand wird einerseits gewährleistet, daß der Kommissionierer bezüglich der Höhe immer einen optimalen Zugriff auf den Warenstapel hat, andererseits wird der Warenstapel zu jedem Zeitpunkt optimal geschützt, etwa wie gegen Kippen. Wenn der Auftrag auf der Palette fertig kommissioniert ist, wobei dem Kommissionierer das Kommissionieren dadurch vereinfacht wird, daß er nicht auf die Reihenfolge der zu kommissionierenden Waren achten muß, d.h. er kann sie beliebig schichten, ohne auf die Stabilität des zu bildenden Stapels zu achten, wird der Container in einem (automatisierten) Trennbereich, wie er beispielsweise in der Fig. 12 dargestellt ist, gebracht, wo die Auftragspalette vom erfindungsgemäßen Container getrennt wird.

Dies geschieht dadurch, daß der Container zuerst auf eine Hubvorrichtung, etwa wie eine Hebebühne gestellt wird. In die Palette werden nun die Rolzen durch die Führungsschienen eingebracht und fixiert. Durch Absenken der Hubvorrichtung, und damit auch des Containers, tritt der obere Teil der kommissionierten Palette aus diesem heraus und wird mit einer Ladungssicherungseinheit, etwa wie einer Wickelmaschine, durch Umwickeln mit Folie gesichert. Nun kann die Auftragspalette verschickt werden, während der Container wieder dem Puffer zugeführt werden kann. Die gesicherte Palette wird an die bestimmungsgemäße Filiale geliefert. Anschließend wird die leere Palette wieder in die Kommissionierzentrale transportiert, um dort wiederum in einem Puffer für Paletten gespeichert zu werden. Aus diesem kann sie entnommen werden, um wiederum in einen erfindungsgemäßen Container eingebracht zu werden, womit der Kreislauf von vorne beginnen kann.

Somit ergeben sich die folgenden Vorteile. Ein manuelles Sichern der Auftragspalette durch Umwickeln mit Folie während des Kommissioniervorgangs entfällt. Die Pickgeschwindigkeit des Kommissionierers erhöht sich, weil er sich nicht auf die Ausrichtung, d.h. die Stabilität, des Stapels zu konzentrieren braucht. Hieraus ergibt sich wiederum, daß sich die Pickleistung des Kommissionierers erhöht. Dadurch, daß der Container nur innerhalb des Kommissionierzentrums eingesetzt wird, und nicht wie bisher üblich mit den Waren "auf die Reise geschickt" wird, braucht man nur eine begrenzte Anzahl der Container zur Verfügung zu stellen, woraus sich direkt ein Kostenvorteil ergibt. Durch den modularen Aufbau der höhenverstellbaren Wände ergibt sich zusätzlich ein ergonomisch positiver Effekt, da es einem Kommissionierer einfach gemacht wird, die zu kommissionierenden Waren zu stapeln.

### BEZUGSZEICHENLISTE

- 1: Container
- 2: Waren
- 3: Palette
- 10: Vorderwand
- 11: Rückwand
- 12: Seitenwand
- 13: Einschub
- 14: Griff
- 15: Boden
- 16: Aussparungen
- 20: Bolzen
- 21: externer Hubmechanismus
- 22: Hebebühne
- 30: Wickelmaschine
- 31: Folie

## Patentansprüche

1. Stapelhilfe zum Stapeln von Waren (2) auf einem Ladehilfsmittel (3) mit einem Boden (15) und Wandteilen (10, 11, 12), die einen auf dem Ladehilfsmittel (3) gestapelten Warenstapel umgeben, wobei die Höhe wenigstens eines (10) der Wandteile veränderbar ist und die Stapelhilfe (1) nach Beendigung des Warenstapelvorgangs wieder von dem Ladehilfsmittel (3) entfernbar ist, **dadurch gekennzeichnet, dass** die stapelhilfe eine in einem der Wandteile (10, 11, 12) ausgebildete Öffnung (13) zum Einschieben des Ladehilfsmittels (3) aufweist.

2. Stapelhilfe nach Anspruch 1, wobei die Wandteile (10, 11,12) eine Grundfläche entsprechend der Palettengrundfläche umschließen.

3. Stapelhilfe nach Anspruch 2, wobei der obere Rand einer Vorder-und/oder Rückwand der Stapelhilfe (1) so ausgestaltet ist, daß der obere Rand der Vorder- und/oder Rückwand an die sich ändernde Höhe des bereits auf dem Ladehilfsmittel gestapelten Warenstapels anpaßbar ist.

4. Stapelhilfe nach Anspruch 3, wobei die Vorderwand (10) aus mehreren Elementen, die steckbar oder durch Gelenk miteinander verbunden sind, besteht, oder ein Rollo oder eine Schiebewand ist.

5. Stapelhilfe nach Anspruch 3 oder 4, wobei die Rückwand (11) aus mehreren Elementen, die steckbar oder durch ein Gelenk miteinander verbunden sind, besteht, oder ein Rollo oder eine Schiebewand ist.

6. Stapelhilfe nach einem der Ansprüche 1 bis 5 mit am Boden (15) befestigaren Seitenwänden (12).

7. Stapelhilfe nach Anspruch 6, wobei die Seitenwände (12) in den Boden (15) steckbar sind oder jeweils über ein Gelenk mit dem Boden verbunden sind.

8. Stapelhilfe nach einem der vorangegangenen Ansprüche, wobei die Vorderwand (10) mit den Seitenwänden (12) verbindbar ist.

9. Stapelhilfe nach einem der vorangegangenen Ansprüche, wobei die Seitenwände (12) jeweils vertikale Aussparungen aufweisen, durch die höhenverfahrbare Bolzen (20) unter ein Ladehilfsmittel (3) greifen können, um so die Palette relativ zur Stapelhilfe (1) anzuheben oder abzusenken.

10. Stapelhilfe nach einem der vorangegangenen Ansprüche, wobei Mittel zum Anheben das Ladehilfsmittels relativ zur Stapelhilfe (1) an mindestens einer der Wände vorgesehen sind.

11. Stapelhilfe nach Anspruch 10, wobei die Mittel zum Anheben Aussparungen in oder Vorsprünge an der Wand sind, die mit einer externen Vorrichtung (21) zum Anheben der Vorrichtung verbindbar sind.

12. Verfahren zum Stapeln von Waren (2) auf einem Ladehilfsmittel (3), aufweisend die Schritte:
(a) Bereitstellen einer Stapelhilfe (1), die einen auf dem Ladehilfsmittel (3) gestapelten Warenstapel umgibt,
(b) Beladen des Ladehilfsmittels (3) mit Waren (2) unter Zuhilfenahme der Stapelhilfe (1), und
(c) Anheben des Ladehilfsmittels (3) relativ zur Stapelhilfe (1), wobei gleichzeitig der aus der Stapelhilfe (1) herausgehobene Warenstapel zur Stabilisierung fortlaufend mit einem Stabilisierungsmittel (31) umwickelt wird, **dadurch gekennzeichnet, dass** eine Stapelhilfe gemäß Anspruch 1 verwendet wird.

13. Verfahren nach Anspruch 12, wobei das Stabilisierungsmittel eine Folie (31) ist.

14. Verfahren nach Anspruch 12, oder 13, wobei in Schritt (c) das Ladehilfsmittel (3) durch eine externe Hubvorrichtung (20, 21) relativ zur Stapelhilfe (1) angehoben wird.

15. Verfahren nach Anspruch 12 oder 13, wobei in Schritt (c) die Stapelhilfe (1) relativ zum Ladehilfsmittel (3) abgesenkt wird.

16. Verfahren nach einem der Ansprüche 13 bis 15, wobei in Schritt (c) das Umwickeln des Warenstapels durch die Folie (31) durch Rotieren einer Folienvorratsrolle um den Warenstapel erfolgt.

17. Verfahren nach Anspruch 16, wobei die Folie (31) unter mechanischer Spannung um den Warenstapel gewickelt wird.

18. Verfahren nach einem der Ansprüche 12 bis 17, wobei in Schritt (a) die Höhe wenigstens eines Wandteils der Stapelhilfe (1) mit zunehmender Höhe des Warenstapels vergrößert wird.

19. Verfahren nach einem der Ansprüche 12 bis 18, wobei das Ladehilfsmittel (3) eine Palette ist.

20. System zum Stapeln von Waren, insbesondere von Waren aus einem Kommissioniersystem gemäß einem Kommissionierauftrag auf einem Ladehilfsmittel mit einer Vorrichtung gemäß einem der Ansprüche 1 bis 11, einer Vorrichtung zum Anheben des Ladehilfsmittels relativ zur Stapelhilfe (1) und einer Vorrichtung zum Umwickeln mit Folie eines durch das Anheben freigelegten Warenstapelabschnitts.

## Claims

1. Stacking device for stacking goods (2) on a loading means (3), with a base (15) and wall parts (10, 11, 12) which surround a stack of goods stacked on the loading means (3), and the height of at least one (10) of the wall parts is variable and the stacking device (1) can be removed from the loading means (3) again once the operation of stacking the goods has been completed, **characterised in that** the stacking device has an opening (13) disposed in one of the wall parts (10, 11, 12) for pushing the loading means (3) in.

2. Stacking device as claimed in claim 1, in which the wall parts (10, 11, 12) surround a base surface corresponding to the pallet base surface.

3. Stacking device as claimed in claim 2, in which the top edge of a front and/or rear wall of the stacking device (1) is designed so that the top edge of the front and/or rear wall can be adapted to the varying height of the stack of goods already stacked on the loading means.

4. Stacking device as claimed in claim 3, in which the front wall (10) comprises several elements which can be fitted to one another or connected to one another by means of a joint, or is a roller blind or a sliding wall.

5. Stacking device as claimed in claim 3 or 4, in which the rear wall (11) comprises several elements which can be fitted to one another or connected to one another by means of a joint, or is a roller blind or a sliding wall.

6. Stacking device as claimed in one of claims 1 to 5 with side walls (12) which can be fitted to the base (15).

7. Stacking device as claimed in claim 6, in which the side walls (12) can be fitted into the base (15) or are each connected to the base by means of a joint.

8. Stacking device as claimed in one of the preceding claims, in which the front wall (10) can be connected to the side walls (12).

9. Stacking device as claimed in one of the preceding claims, in which the side walls (12) each have vertical cut-outs through which the vertically displaceable bolts (20) can extend underneath a loading means (3) in order to raise or lower the pallet relative to the stacking device (1).

10. Stacking device as claimed in one of the preceding claims, in which means are provided on at least one of the walls for raising the loading means relative to the stacking device (1).

11. Stacking device as claimed in claim 10, in which the raising means are cut-outs in or projections on the wall, which can be connected to an external device (21) for raising the device.

12. Method of stacking goods (2) on a loading means (3), comprising the steps of:
(a) erecting a stacking device (1) which surrounds a stack of goods stacked on the loading means (3),
(b) loading the loading means (3) with goods (2) with the aid of the stacking device (1) and
(c) raising the loading means (3) relative to the stacking device (1), and the stack of goods raised out of the stacking device (1) is simultaneously continuously wrapped with a stabilising means (31) to impart stability, **characterised in that** a stacking device is used as claimed in claim 1.

13. Method as claimed in claim 12 in which the stabilising means is a film (31).

14. Method as claimed in claim 12 or 13 whereby in step (c), the loading means (3) is raised relative to the stacking device (1) by means of an external lifting device (20, 21).

15. Method as claimed in claim 12 or 13 whereby in step (c), the stacking device (1) is lowered relative to the loading means (3).

16. Method as claimed in one of claims 13 to 15 whereby in step (c), the stack of goods is wrapped by the film (31) by rotating a film supply roller around the stack of goods.

17. Method as claimed in claim 16 whereby the film (31) is wrapped round the stack of goods under mechanical tension.

18. Method as claimed in one of claims 12 to 17 whereby in step (a), the height of at least one wall part of the stacking device (1) is increased as the height of the stack of goods increases in height.

19. Method as claimed in one of claims 12 to 18 in which the loading means (3) is a pallet.

20. System for stacking goods, in particular goods from a consignment system based on a consignment order, on a loading means with a device as claimed in one of claims 1 to 11, a device for raising the loading means relative to the stacking device (1) and a device for wrapping film around a section of the stack of goods exposed due to the lifting action.

## Revendications

1. Dispositif d'aide à l'empilage de marchandises (2) sur des moyens d'aide au chargement (3), comprenant un fond (15) et des parties formant paroi (10, 11, 12), entourant une pile de marchandises empilées sur les moyens d'aide au chargement (3), la hauteur d'au moins l'une (10) des parties formant paroi étant modifiable, et le dispositif d'aide à l'empilage (1) étant susceptible d'être enlevé de nouveau des moyens d'aide au chargement (3), après achèvement du processus d'empilage de marchandises, **caractérisé en ce que** le dispositif d'aide à l'empilage présente une ouverture (13), réalisée dans l'une des parties formant paroi (10, 11, 12), pour l'insertion des moyens d'aide au chargement (3).

2. Dispositif d'aide à l'empilage selon la revendication 1, **caractérisé en ce que** les parties formant paroi (10, 11, 12) entourent une aire de base correspondant à l'aire de base de la palette.

3. Dispositif d'aide à l'empilage selon la revendication 2, **caractérisé en ce que** le bord supérieur d'une paroi avant et/ou arrière du dispositif d'aide à l'empilage (1) est réalisé de sorte que le bord supérieur de la paroi avant et/ou arrière soit adaptable à la hauteur, se modifiant, de la pile de marchandises déjà empilée sur les moyens d'aide au chargement.

4. Dispositif d'aide à l'empilage selon la revendication 3, **caractérisé en ce que** la paroi avant (10) est composée de plusieurs éléments, reliés ensemble par emboîtement ou par une articulation, ou est un store ou une paroi coulissante.

5. Dispositif d'aide à l'empilage selon la revendication 3 ou 4, **caractérisé en ce que** la paroi arrière (11) est composée de plusieurs éléments, reliés ensemble par emboîtement ou par une articulation, ou est un store ou une paroi coulissante.

6. Dispositif d'aide à l'empilage selon l'une des revendications 1 à 5, avec des parois latérales (12) susceptibles d'être fixées au fond (15).

7. Dispositif d'aide à l'empilage selon la revendication 6, **caractérisé en ce que** les parois latérales (12) sont susceptibles d'être enfichées dans le fond (15), ou sont chacune reliées au fond par une articulation.

8. Dispositif d'aide à l'empilage selon l'une des revendications précédentes, **caractérisé en ce que** la paroi avant est susceptible d'être reliée aux parois latérales (12).

9. Dispositif d'aide à l'empilage selon l'une des revendications précédentes, **caractérisé en ce que** les parois latérales (12) présentant chacune des évidements verticaux, à travers lesquels des boulons (20) déplaçables en hauteur peuvent effectuer une préhension sous des moyens d'aide au chargement (3), pour ainsi lever ou abaisser la palette par rapport au dispositif d'aide à l'empilage (1).

10. Dispositif d'aide à l'empilage selon l'une des revendications précédentes, **caractérisé en ce que** des moyens de levage des moyens d'aide au chargement par rapport au dispositif d'aide à l'empilage (1) sont prévus sur au moins l'une des parois.

11. Dispositif d'aide à l'empilage selon la revendication 10, **caractérisé en ce que** les moyens de levage sont des évidements ménagés dans la paroi ou des saillies réalisées sur la paroi, susceptibles d'être relié(e)s à un dispositif externe (21), pour lever le dispositif.

12. Procédé pour empiler des marchandises (2) sur des moyens d'aide au chargement (3), présentant les étapes consistant à :
(a) fournir un dispositif d'aide à l'empilage (1), entourant une pile de marchandises, empilée sur les moyens d'aide au chargement (3),
(b) charger les moyens d'aide au chargement (3) avec des marchandises (2), en s'aidant du dispositif d'aide à l'empilage (1), et
(c) lever les moyens d'aide au chargement (3) par rapport au dispositif d'aide à l'empilage (1), la pile de marchandises, extraite par levage hors du dispositif d'aide à l'empilage (1), étant simultanément enveloppée en continu avec des moyens de stabilisation (31), dans un but de stabilisation, **caractérisé en ce que** l'on utilise un dispositif d'aide à l'empilage selon la revendication 1.

13. Procédé selon la revendication 12, **caractérisé en ce que** les moyens de stabilisation sont un film (31).

14. Procédé selon la revendication 12 ou 13, dans lequel, à l'étape (c), les moyens d'aide au chargement (3) sont levés par rapport au dispositif d'aide à l'empilage (1), au moyen d'un dispositif de levage externe (20, 21).

15. Procédé selon la revendication 12 ou 13, dans lequel, à l'étape (c), le dispositif d'aide à l'empilage (1) est abaissé par rapport aux moyens d'aide au chargement (3).

16. Procédé selon l'une des revendications 13 à 15, dans lequel, à l'étape (c), l'enroulement de la pile de marchandises par le film (31) s'effectue par rotation d'un rouleau de réserve de film autour de la pile de marchandises.

17. Procédé selon la revendication 16, **caractérisé en ce que** le film est enroulé sous l'effet d'une tension mécanique autour de la pile de marchandises.

18. Procédé selon l'une des revendications 12 à 17, dans lequel, à l'étape (a), la hauteur d'au moins une partie formant paroi du dispositif d'aide à l'empilage (1) est augmentée, de pair avec l'augmentation de la hauteur de la pile de marchandises.

19. Procédé selon l'une des revendications 12 à 18, **caractérisé en ce que** les moyens d'aide au chargement (3) sont une palette.

20. Système pour empiler des marchandises, en particulier des marchandises provenant d'un système de préparation des commandes, selon un ordre de préparation de commande, sur des moyens d'aide au chargement, avec un dispositif selon l'une des revendications 1 à 11, un dispositif pour lever les moyens d'aide au chargement par rapport au dispositif d'aide à l'empilage (1), et un dispositif pour envelopper avec un film un tronçon de pile de marchandises dégagé du fait du levage.
